(19)

**Europäisches Patentamt**
**European Patent Office**
**Office européen des brevets**

(11) **EP 4 654 458 A1**

(12) **EUROPEAN PATENT APPLICATION**

(43) Date of publication:
**26.11.2025 Bulletin 2025/48**

(21) Application number: **24177588.1**

(22) Date of filing: **23.05.2024**

(51) International Patent Classification (IPC):
**H02P 9/30** (2006.01)    **H02M 7/797** (2006.01)
**H02P 9/34** (2006.01)

(52) Cooperative Patent Classification (CPC):
**H02P 9/34; H02M 7/797; H02P 9/302**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
• **HEIKKILA, Joni**
  **00380 Helsinki (FI)**
• **PULLI, Tuomas**
  **00380 Helsinki (FI)**
• **PIRSTO, Ville**
  **00380 Helsinki (FI)**

(74) Representative: **Sykora & König Patentanwälte PartG mbB**
**Maximilianstraße 2**
**80539 München (DE)**

(54) **METHOD, CONTROLLER AND COMPUTER PROGRAM FOR OPERATING AN INVERTER, AND INVERTER SYSTEM**

(57)    A method for operating an inverter (20) for driving a generator (22) is described. The inverter (20) comprises a DC-link (24) having a DC-link capacitor (26) and the inverter (20) being configured for converting a three-phase AC voltage ($U_u$, $U_v$, $U_w$) generated by the generator (22) into a DC-link voltage (Uc) to be applied to the DC-link capacitor (26). The method comprises: receiving a DC-link voltage reference ($U_{C,REF}$) to be applied to the DC-link (24); receiving an actual DC-link voltage (Uc) currently being present over the DC-link (24); determining a stator parameter reference ($I_{D,REF}$, $I_{Q,REF}$, $\Psi_{D,REF}$, $\Psi_{Q,REF}$) depending on the received DC-link voltage reference ($U_{C,REF}$) and on the received actual DC-link voltage ($U_C$); modifying the determined stator parameter reference ($I_{D,REF}$, $I_{Q,REF}$, $\Psi_{D,REF}$, $\Psi_{Q,REF}$) by adding a dynamic stabilizing term to the stator parameter reference ($I_{D,REF}$, $I_{Q,REF}$, $\Psi_{D,REF}$, $\Psi_{Q,REF}$); generating a switching signal (SWS) for the inverter (20) depending on the modified stator parameter reference ($I_{D,REF}$, $I_{Q,REF}$, $\Psi_{D,REF}$, $\Psi_{Q,REF}$); and operating the inverter (20) by supplying the switching signal (SWS) to the inverter (20).

**FIG. 2**

EP 4 654 458 A1

**Description**

FIELD OF THE INVENTION

The invention relates to the field of electrical inverters. In particular, the invention relates to a method, a controller, and a computer program for operating an inverter for driving a generator, and to an inverter system comprising the controller. Further, the invention relates to a computer-readable medium on which the computer program is stored.

BACKGROUND OF THE INVENTION

An inverter for driving a generator typically comprises a DC-link having a DC-link capacitor, a DC terminal for being connected to a DC device or a DC grid, an AC terminal coupled to the generator, and a set of semiconductor switches and for converting a three-phase AC voltage generated by the generator into a DC-link voltage applied to the DC-link capacitor.

Applications where the DC-link voltage is controlled by an inverter driven generator are becoming more common, for example for supplying energy to a DC grid of a ship or an electric vehicle, such as a train, e.g. a tram or subway, or for converting electric energy generated by a wind turbine. In these cases, a fast response of the DC-link voltage control is expected in order to avoid too high or too low DC-link voltages in case of rapid load variations. This fast response may be achieved by providing a high proportional gain to the DC voltage controller of the inverter. However, there are cases in which a high proportional gain cannot be used, e.g., at a high load, in particular when an inductance of the inverter is large or when a capacitance C of the DC capacitor is small, as explained in the following:

The voltage over the DC-link capacitor Uc is related to the current Ic through the DC-link capacitor by:

$$C \frac{dU_C}{dt} = I_C \qquad (1)$$

where C is the capacitance of the DC-link capacitor. The current Ic through the DC-link capacitor may be expressed as function of a power Pc of the DC-link capacitor and the DC-link voltage Uc over the DC-link capacitor:

$$I_C = \frac{P_C}{U_C} \qquad (2)$$

By inserting equation 2 into equation 1 and by simplifying a relation between the square of the DC-link voltage Uc and the power Pc of the DC-link capacitor it is found that

$$\frac{C}{2} \frac{dU_C^2}{dt} = P_C \qquad (3)$$

Assuming that the inverter is supplying, in other words charging, the DC-link and that an external device, such as a load, e.g., a motor driven by an external inverter, is discharging the DC-link it can be derived that

$$P_C = -P_{INVERTER} - P_{LOAD} \qquad (4)$$

where $P_{INVERTER}$ is the power of the inverter and $P_{LOAD}$ is the power of the external device.

Assuming that the power of the inverter is the power of a non-salient permanent magnet machine $P_{INVERTER}$ is given by:

$$P_{INVERTER} = U_D I_D + U_Q I_Q \qquad (5)$$

where $U_D$ and $U_Q$ are the stator voltage components and $I_D$ and $I_Q$ are the stator current components in the synchronous reference frame, in other words in the dq-frame. Under the assumption that the d-axis is aligned with the permanent magnet flux vector, the stator voltage components are

$$U_D = RI_D - \omega LI_Q + L\frac{dI_D}{dt} \tag{6}$$

$$U_Q = RI_Q + \omega LI_D + L\frac{dI_Q}{dt} + \omega\Psi \tag{7}$$

where R and L are the stator resistance and inductance respectively, $\omega$ is the mechanical frequency, in other words the rotational speed of the generator, and $\Psi$ is the magnitude of the permanent magnet flux of the generator. By inserting equation 6 and equation 7 into equation 5 and by simplifying the result, an exact relation between the power of the inverter $P_{INVERTER}$ and the stator current components $I_D$, $I_Q$ may be found as

$$P_{INVERTER} = RI_D^2 + \frac{L}{2}\frac{dI_D^2}{dt} + RI_Q^2 + \frac{L}{2}\frac{dI_Q^2}{dt} + \omega\Psi I_Q \tag{8}$$

Assuming that resistive losses are insignificant an approximate relation between the power $P_{INVERTER}$ of the inverter and the stator current components $I_D$, $I_Q$ it is found that

$$P_{INVERTER} = \frac{L}{2}\frac{dI_D^2}{dt} + \frac{L}{2}\frac{dI_Q^2}{dt} + \omega\Psi I_Q \tag{9}$$

Assuming that the inverter controls the stator current components $I_D$, $I_Q$, the stator current references are:

$$I_{D,REF} = 0 \tag{10}$$

$$I_{Q,REF} = -\frac{K_P}{\omega\Psi}\left(U_{C,REF}^2 - U_C^2\right) - \frac{K_I}{\omega\Psi}\int\left(U_{C,REF}^2 - U_C^2\right)dt \tag{11}$$

where $U_{C,REF}^2$ is the reference for the square of the DC-link voltage, $K_P$ is the proportional gain and $K_I$ is the integral gain. In practice, a PI-controller may be used to calculate the q-axis stator current reference $I_{Q,REF}$ but for the following analysis the integral part is replaced by its steady state value:

$$I_{Q,REF} = -\frac{K_P}{\omega\Psi}\left(U_{C,REF}^2 - U_C^2\right) - \frac{P_{LOAD}}{\omega\Psi} \tag{12}$$

Setting the d-axis current reference $I_{D,REF}$ to zero corresponds to traditional MTPA (Maximum Torque Per Ampere) principle. In practice, the d-axis current reference $I_{D,REF}$ may need to be adjusted if maximum output voltage of the inverter is reached. However, for this analysis the d-axis current reference $I_{D,REF}$ is assumed to be constant. Also L, $\omega$, $\Psi$, $P_{LOAD}$, $U_{C,REF}^2$ and $K_P$ are assumed to be constant. Assuming that in general a stator current controller is much faster than a DC-link voltage controller it is reasonable to assume that the stator current components $I_D$, $I_Q$ follow their corresponding references:

$$I_D = I_{D,REF} \tag{13}$$

$$I_Q = I_{Q,REF} \tag{14}$$

$$\frac{L}{2}\frac{dI_D^2}{dt} = 0 \tag{15}$$

$$\frac{L}{2}\frac{dI_Q^2}{dt} = \frac{L}{2}\frac{d\left(-\frac{K_P}{\omega\Psi}\left(U_{C,REF}^2 - U_C^2\right) - \frac{P_{LOAD}}{\omega\Psi}\right)^2}{dt} \tag{16a}$$

$$\frac{L}{2}\frac{dI_Q^2}{dt} = L\frac{K_P}{\omega\Psi}\left(-\frac{K_P}{\omega\Psi}\left(U_{C,REF}^2 - U_C^2\right) - \frac{P_{LOAD}}{\omega\Psi}\right)\frac{dU_C^2}{dt} \tag{16b}$$

By inserting equation 15 and equation 16b into equation 9 and by simplifying a relation between the power of the inverter $P_{INVERTER}$ and the square of the DC-link voltage it is found that

$$P_{INVERTER} = L\frac{K_P}{\omega\Psi}\left(-\frac{K_P}{\omega\Psi}\left(U_{C,REF}^2 - U_C^2\right) - \frac{P_{LOAD}}{\omega\Psi}\right)\frac{dU_C^2}{dt} - K_P\left(U_{C,REF}^2 - U_C^2\right) - P_{LOAD} \tag{17}$$

By inserting equation 17 into equation 4 and by simplifying a relation between the power of the DC-link and the square of the DC-link voltage it is found that

$$P_C = -L\frac{K_P}{\omega\Psi}\left(-\frac{K_P}{\omega\Psi}\left(U_{C,REF}^2 - U_C^2\right) - \frac{P_{LOAD}}{\omega\Psi}\right)\frac{dU_C^2}{dt} + K_P\left(U_{C,REF}^2 - U_C^2\right) \tag{18}$$

By inserting equation 18 into equation 3 and by simplifying an equation describing the dynamics of the DC-link voltage control it is found that

$$\frac{dU_C^2}{dt} = \frac{K_P\left(U_{C,REF}^2 - U_C^2\right)}{\frac{C}{2} + L\frac{K_P}{\omega\Psi}\left(-\frac{K_P}{\omega\Psi}\left(U_{C,REF}^2 - U_C^2\right) - \frac{P_{LOAD}}{\omega\Psi}\right)} \tag{19}$$

In order to analyze the stability of the DC-link voltage control the equation can be linearized around the steady state operation point:

$$\frac{dU_C^2}{dt}\left(U_C^2\right) = f(U_C^2) \tag{20}$$

$$\frac{dU_C^2}{dt}\left(U_C^2\right) \approx f\left(U_{C,REF}^2\right) + \frac{df\left(U_{C,REF}^2\right)}{dU_C^2}\left(U_C^2 - U_{C,REF}^2\right) \tag{21}$$

$$\frac{dU_C^2}{dt}\left(U_C^2\right) \approx \frac{-K_P}{\frac{C}{2} - L\frac{K_P}{\omega\Psi}\frac{P_{LOAD}}{\omega\Psi}}\left(U_C^2 - U_{C,REF}^2\right) \tag{22}$$

From equation 22 it is evident that in order to maintain stability the proportional gain will need to be limited according to

$$K_P < \frac{1}{2}\frac{C}{L}\frac{(\omega\Psi)^2}{P_{LOAD}} \tag{23}$$

Consequently, with the conventional approaches, a high proportional gain cannot be used at high load, particularly when the inductance L is large or when capacitance C is small. For example, when the small capacitance C may range from 1.0 to 2.0 p.u. and the large inductance L ranges from 0.5 to 1.0 p.u., given a load power $P_{LOAD}$ in a range from 0.5 to. 1.0 p.u. and back-emf $\omega\Psi$ in a range from 0.5 to 1.0 p.u., without the method in the present application the maximum gain varies according to equation 23 in a range from 0.125 to 2.0 p.u. This is a well-known issue also with grid connected inverters that are supplying the DC-link from a weak grid corresponding to a high inductance L in equation 23. In contrast, with the inventive method proposed in the present application a constant gain of e.g. 2.0 p.u. always can be used. It has to be mentioned in this context that without the present invention the maximum gain heavily depends on the load power $P_{LOAD}$, the inductance L, the capacitance C, the speed $\omega$ and the permanent magnet flux $\Psi$. Therefore, it is not sensible to provide concrete and/or absolute values of the corresponding parameters in their specific units. Therefore, the expression "p.u.", i.e., "per unit", is used in the above example.

DESCRIPTION OF THE INVENTION

It is an objective of the present invention to provide a method, a controller, and a computer program for operating an inverter for driving a generator, which enable to use a high proportional gain, in particular at high load, in particular when a stator inductance L of the generator is large and/or when a capacitance C of a DC-link capacitor of the inverter is small. It is another objective of the present invention to provide an inverter system comprising the controller and the inverter. It is another objective of the present invention to provide a computer-readable medium on which the computer program is stored.

These objectives are achieved by the subject-matter of the independent claims. Further exemplary embodiments are evident from the dependent claims and the following description.

A first aspect relates to a method for operating an inverter for driving a generator. The inverter comprises a DC-link having a DC-link capacitor. The inverter is configured for converting a three-phase AC voltage generated by the generator into a DC-link voltage to be applied to the DC-link capacitor. The method comprises: receiving a DC-link voltage reference to be applied to the DC-link; receiving an actual DC-link voltage currently being present over the DC-link; determining a stator parameter reference depending on the received DC-link voltage reference and on the received actual DC-link voltage; modifying the determined stator parameter reference by adding a dynamic stabilizing term to the stator parameter reference; generating a switching signal for the inverter depending on the modified stator parameter reference; and operating the inverter by supplying the switching signal to the inverter.

A second aspect relates to a controller for operating the inverter. The controller comprises a memory for storing one or more measured, determined, and/or predetermined current and/or voltage values, and a processor communicatively coupled to the memory and being configured to carry out the method as described above and in the following.

A third aspect relates to an inverter system. The inverter system comprises the inverter for driving the generator and the controller for operating the inverter.

A fourth aspect relates to a computer program for operating the inverter for driving the generator. The computer program comprises computer-readable instructions which, when being executed by the processor of the controller, carry out the method as described above an in the following.

A fifth aspect relates to a computer-readable medium on which the computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The proposed aspects involve adding the dynamic stabilizing term into any stator parameter reference, e.g., a stator current reference or a stator flux reference, in order to allow for higher proportional gain, in particular at high load. So, the above aspects enable to set stator parameter references for the generator such that high performance DC-link voltage control is possible. In particular, higher proportional gain and thus faster response compared to traditional MTPA principle is possible.

The method may be carried out by the controller for controlling the inverter. The DC-link voltage reference may be predetermined and/or may be sent to the controller by an external device. The external device may be external with respect to the controller and with respect to the inverter. The actual DC-link voltage may be measured, e.g., by a voltage sensor of the inverter.

The inverter may comprise two or more, e.g., six, semiconductor switches for converting the AC-voltage into the DC-link voltage. The switching signal may comprise switching commands for the semiconductor switches. When generating the switching signal, timing limitations of the semiconductor switches, such as an interlocking time and/or a minimal on/off time of the semiconductor switches, may be considered. The switching signal, in particular the switching commands, then may be translated into gate voltages for controlling the semiconductor switches, as it is known in the art. The inverter may be a two-level voltage source inverter or a three-level voltage source inverter, for example.

According to an embodiment, when determining the stator parameter reference, a d- axis stator parameter reference and a q-axis stator parameter reference are determined, and the dynamic stabilizing term is added to at least one of the stator parameter references.

According to an embodiment, the dynamic stabilizing term is added to the d-axis stator parameter reference.

According to an embodiment, the method comprises, before adding the dynamic stabilizing term to the stator parameter reference: determining the dynamic stabilizing term such that an electric energy needed to change an actual current generated by the generator and corresponding to actual stator currents or actual stator fluxes is minimized.

According to an embodiment, when determining the dynamic stabilizing term such that the electric energy needed to change the actual stator parameter is minimized, the dynamic stabilizing term is determined such that a change of the electric energy stored in the actual stator currents or the actual stator fluxes corresponding to the actual current generated by the generator is minimized.

According to an embodiment, the dynamic stabilizing term is determined such that

$$\frac{L}{2}\frac{dI_{D,REF}^2}{dt} + \frac{L}{2}\frac{dI_{Q,REF}^2}{dt} = 0$$

or

$$\frac{1}{2L}\frac{d\Psi_{D,REF}^2}{dt} + \frac{1}{2L}\frac{d\Psi_{Q,REF}^2}{dt} = 0$$

with L being a stator inductance of a stator of the generator, in particular if the generator is a permanent magnet generator. However, for other types of generators similar equations may be found for determining the dynamic stabilizing term such that the electric energy needed to change the actual current, in particular the actual stator currents or the actual stator flux, is minimized.

According to an embodiment, the method comprises: before determining the stator parameter reference, determining a rotational speed of the generator and determining the stator parameter reference depending on the rotational speed of the generator. The rotational speed may be measured, e.g., by an encoder, and may be sent to a controller for controlling the inverter. Alternatively, the rotational speed may be estimated from an output voltage and from an output current of the inverter by the controller or by a flux observer known in the art and used to obtain the rotational speed.

According to an embodiment, the method comprises: receiving an actual stator current generated by the generator; determining a stator voltage reference corresponding to the three-phase AC voltage to be generated by the generator depending on the actual stator current and on the modified stator parameter reference; and generating the switching signal depending on the modified stator parameter reference by generating the switching signal depending on the determined stator voltage reference. The stator voltage reference may comprise two stator voltage reference components, e.g., a d-axis voltage reference component and a q-axis voltage reference component. The d-axis voltage reference component and the q-axis voltage reference component in the dq-frame may be transferred into three voltage reference components in a uvw-frame (corresponding to the abc-frame), i.e., an u-phase voltage reference component, a v-phase voltage reference component and a w-phase voltage reference component, e.g., by an inverse space vector transformation. Then, the switching signal may be determined depending on the three voltage reference components in the uvw-frame. When transferring the voltage reference components in the dq-frame into the voltage reference components in the uvw-frame, an actual angle of the stator may be considered. The actual angle may be measured by an appropriate sensor, e.g., a hall-sensor, or may be estimated, e.g., by the controller.

According to an embodiment, the method comprises, after receiving the actual stator current and before determining the stator voltage reference: determining the actual d-axis stator current and an actual q-axis current from the actual stator current, and determining the stator voltage reference depending on the actual d-axis stator current and the actual q-axis current and on the modified stator parameter reference. The actual stator current may be measured by a current sensor of the generator or may be estimated by the controller. The actual d-axis stator current and the actual q-axis stator current may be determined from the actual stator current by a space vector transformation. Optionally, an actual d-axis stator flux and an actual q-axis stator flux may be determined from the actual d-axis stator current and the actual q-axis stator current. In this case, the stator voltage reference may be determined depending on the actual d-axis stator flux and the actual q-axis stator flux and on the modified stator parameter reference.

According to an embodiment, the stator parameter reference is the stator current reference or the stator flux reference. In particular, the stator current reference may be a d-axis or a q-axis stator current reference, or the stator current reference may be a d-axis or a q-axis stator flux reference, respectively.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows an example of an inverter for driving a generator;

Fig. 2 shows an exemplary embodiment of a controller for operating an inverter.

Fig. 3 shows an exemplary embodiment of a controller for operating an inverter.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

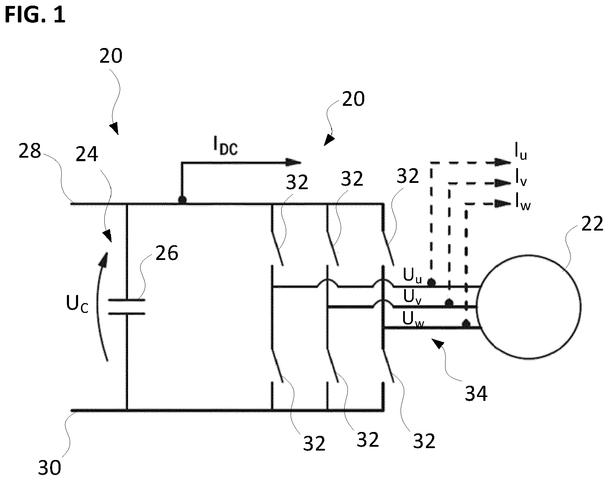

**Fig. 1** shows an inverter 20, in particular an electrical inverter. The inverter 20 is electrically coupled to a generator 22. The inverter 20 is configured for driving the generator 22. The generator 22 is configured for generating a three-phase AC voltage.

The inverter 20 comprises a DC-link 24 having a DC-link capacitor 26, a first DC-terminal 28, a second DC-terminal 30, a set of semiconductor switches 32, e.g. six semiconductor switches 32, and an AC-terminal 34. The inverter 20 is a two-level voltage source inverter. However, in an alternative embodiment, a three-level voltage source inverter may be used, for example.

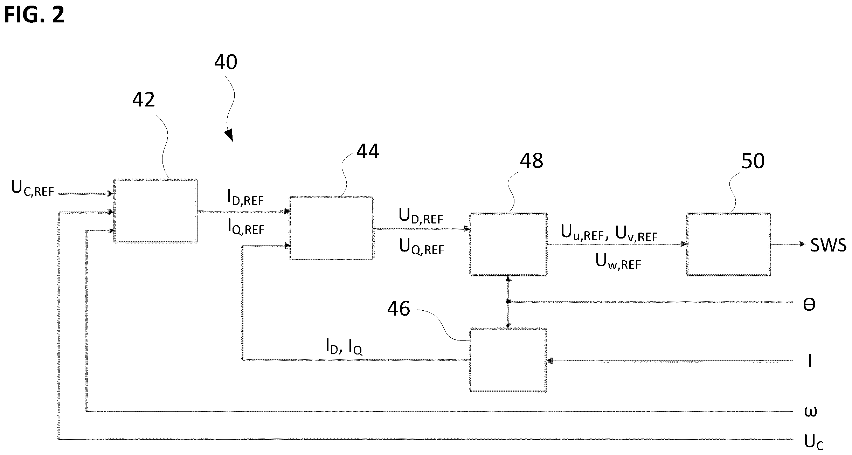

The AC-terminal 34 is coupled to the generator 22. The AC-terminal 34 is configured for receiving the three-phase AC voltage generated by the generator 22. The semiconductor switches 32 are configured for converting the three-phase AC voltage into a DC voltage, in particular a DC-link voltage, applied to the DC-link capacitor 26. To this end, the semiconductor switches 32, in particular gates of the semiconductor switches 32, are coupled to a controller 40 (see figure 2) for controlling the inverter 20.

The three-phase AC voltage consists of a phase u voltage $U_u$, a phase v voltage $U_v$, and a phase w voltage $U_w$ applied to the AC-terminal 34 by the generator 22. As a result, the generator 22 feeds a three-phase current into the AC-terminal 34. The three-phase current consists of a phase u current $I_u$, a phase v current $I_v$, and a phase w current $I_w$.

The three-phase AC voltage is converted by the semiconductor switches 32 into an actual DC-link voltage Uc resulting over the DC-link capacitor 26. This enables to feed a corresponding DC current $I_{DC}$ to the external device.

The DC-terminals 28, 30 are configured for being connected to a DC device (not shown) or to a DC grid (not shown). The first DC-terminal 28 may be coupled to a positive potential of the DC device and the second DC-terminal 30 may be coupled to a negative potential of the DC device. The DC device may be external with respect to the inverter 20. The DC device may be a rechargeable battery or a DC grid. The inverter 20 and the generator 22 may be arranged in a ship. In this case, the DC grid may be a DC grid of the ship. Alternatively, the inverter 20 and the generator 22 may be arranged in an electric vehicle, such as a train or subway. Alternatively, the generator 22 may be a wind turbine.

The inverter 20 may comprise one or more components to measure a current space vector, e.g., depending on the phase u current $I_u$, the phase v current $I_v$, and the phase w current $I_w$ or by using actual states of the switches 32 and the DC-link current $I_{DC}$, and/or to measure the actual DC-link voltage Uc. These component(s) may be one or more current and/or, respectively, voltage sensors (not shown).

**Fig. 2** shows an exemplary embodiment of the controller 40 for operating an inverter, e.g., the inverter 20 of figure 1. The controller 40 may comprise a DC voltage controller 42, a current controller 44, a first transformation block 46, a second transformation block 48, and a modulator 50. In addition, the controller 40 comprises a memory (not shown) for storing one or more measured, determined, and/or predetermined current and/or voltage values, and a processor (not shown) communicatively coupled to the memory and being configured to carry out a method for operating the inverter 20, as described in the following.

A DC-link voltage reference $U_{C,REF}$ to be applied to the DC-link 24 may be received by the controller 40, in particular by the DC voltage controller 42. The DC-link voltage reference $U_{C,REF}$ may be predetermined and/or may be generated by the external device. The external device may be external with respect to the controller 40 and with respect to the inverter 20.

In addition, the actual DC-link voltage Uc currently being present over the DC-link 26 may be received by the controller 40, in particular by the DC voltage controller 42. The actual DC-link voltage Uc may be measured, e.g., by a voltage sensor (not shown) of the inverter 20.

A stator parameter reference, e.g., a stator current reference $I_{D,REF}$, $I_{Q,REF}$ corresponding to a stator current to be generated by the generator 22 may be determined depending on the received DC-link voltage reference $U_{C,REF}$ and on the received actual DC-link voltage Uc, e.g., by the DC voltage controller 42. When determining the stator current reference $I_{D,REF}$, $I_{Q,REF}$, a d-axis stator current reference $I_{D,REF}$ and a q-axis stator current reference $I_{Q,REF}$ may be determined. The DC voltage controller 42 may have a control law for regulating a DC voltage level at the DC-link 24.

Optionally, before determining the stator current reference $I_{D,REF}$, $I_{Q,REF}$, a rotational speed $\omega$ of the generator 22 may be determined. In this case, the stator current reference $I_{D,REF}$, $I_{Q,REF}$ may be determined depending on the rotational speed $\omega$ of the generator 22 also. The rotational speed $\omega$ may be measured, e.g., by an encoder (not shown), and may be sent to the controller 40. Alternatively, the rotational speed $\omega$ may be estimated from an output voltage $U_u$, $U_v$, $U_w$, and from an output current $I_u$, $I_v$, $I_w$, of the inverter by the controller 40 or by a flux observer (not shown) known in the art and used to obtain the rotational speed $\omega$.

Before sending the determined stator current reference $I_{D,REF}$, $I_{Q,REF}$ to the current controller 44, the determined stator current reference $I_{D,REF}$, $I_{Q,REF}$ may be modified by adding a dynamic stabilizing term to the stator current reference $I_{D,REF}$, $I_{Q,REF}$. The dynamic stabilizing term may be added to at least one of the stator current references $I_{D,REF}$, $I_{Q,REF}$. For example, the dynamic stabilizing term may be added to the d-axis stator current reference $I_{D,REF}$. The current controller 44 may have a control law for regulating the inverter current to a value defined by the determined stator current reference $I_{D,REF}$, $I_{Q,REF}$ coming from the DC voltage controller 42.

The dynamic stabilizing term may be determined such that the variation in the energy stored in the magnetic field of the generator 22 and corresponding to actual stator currents $I_D$, $I_Q$ is minimized. In particular, in order to allow for high proportional gain at high load the stator current reference $I_{D,REF}$, $I_{Q,REF}$, e.g., the d-axis stator current reference $I_{D,REF}$, may be chosen such that the energy needed to change actual stator current components $I_D$, $I_Q$ is minimized:

$$\frac{L}{2}\frac{dI^2_{D,REF}}{dt} + \frac{L}{2}\frac{dI^2_{Q,REF}}{dt} = 0 \tag{24}$$

with L being a stator inductance of a stator of the generator 22.

Assuming a slowly changing integral term condition 24 can be satisfied, for example, with

$$I_{D,REF} = -\sqrt{I_0^2 - \frac{K_P}{\omega\Psi}\left(U^2_{C,REF} - U^2_C\right)\left(\frac{K_P}{\omega\Psi}\left(U^2_{C,REF} - U^2_C\right) + 2\frac{K_I}{\omega\Psi}\int\left(U^2_{C,REF} - U^2_C\right)dt\right)} \tag{25}$$

where $I_0$ is the d-axis stator current reference in steady state. However, any other dynamic stabilizing term fulfilling the requirement of equation 24 may be used.

For the following analysis the integral part of equation 25 is replaced by its steady state value

$$I_{D,REF} = -\sqrt{I_0^2 - \frac{K_P}{\omega\Psi}\left(U^2_{C,REF} - U^2_C\right)\left(\frac{K_P}{\omega\Psi}\left(U^2_{C,REF} - U^2_C\right) + 2\frac{P_{LOAD}}{\omega\Psi}\right)} \tag{26}$$

Assuming that the current controller 44 is much faster than the DC-link voltage controller 42, in other words that the current control is much faster than DC-link voltage control, it is reasonable to assume that the stator current components $I_D$, $I_Q$ follow their corresponding references:

$$I_D = I_{D,REF} \tag{27}$$

$$\frac{L}{2}\frac{dI_D^2}{dt} = \frac{L}{2}\frac{d\left(I_0^2 - \frac{K_P}{\omega\Psi}\left(U_{C,REF}^2 - U_C^2\right)\left(\frac{K_P}{\omega\Psi}\left(U_{C,REF}^2 - U_C^2\right) + 2\frac{P_{LOAD}}{\omega\Psi}\right)\right)}{dt} \qquad (28a)$$

$$\frac{L}{2}\frac{dI_D^2}{dt} = L\frac{K_P}{\omega\Psi}\left(\frac{K_P}{\omega\Psi}\left(U_{C,REF}^2 - U_C^2\right) + \frac{P_{LOAD}}{\omega\Psi}\right)\frac{dU_C^2}{dt} \qquad (28b)$$

By inserting equation 16b and equation 28b into equation 9 and by simplifying a relation between the power of the inverter and the square of the DC-link voltage it is found that

$$P_{INVERTER} = -K_P\left(U_{C,REF}^2 - U_C^2\right) - P_{LOAD} \qquad (29)$$

By inserting equation 29 into equation 4 and by simplifying a relation between the power of the DC-link and the square of the DC-link voltage it is found that

$$P_C = K_P\left(U_{C,REF}^2 - U_C^2\right) \qquad (30)$$

By inserting equation 30 into equation 3 and by simplifying an equation describing the dynamics of the DC-link voltage control it is found that

$$\frac{dU_C^2}{dt} = \frac{-2K_P}{C}\left(U_C^2 - U_{C,REF}^2\right) \qquad (31)$$

From equation 31 it is evident that stability is maintained even if the proportional gain is set to higher values than suggested by equation 23. Therefore, higher performance for the DC-link voltage control is possible. It should be noted that similar results can be achieved with alternative forms of equation 25 for the d-axis stator current reference $I_{D,REF}$. Therefore, the invention is not restricted to this form of the equation but to the principle of adding the dynamic stabilizing term to the corresponding current reference in order to allow for higher proportional gain.

It has to be noted that the steady state d-axis current reference $I_0$ mentioned above may be chosen such that equation 25 gives a negative real value rather than an imaginary value. Once equation 25 goes imaginary the d-axis current reference could be set to zero or some other constant value and the proportional gain $K_P$ could be reduced to avoid instability. The steady state d-axis current reference $I_0$ may be chosen such that the dynamic performance requirements for the corresponding application are fulfilled at every operation point. For example, at full load the steady state d-axis current reference $I_0$ may be reduced since load cannot increase anymore.

An actual stator current I generated by the generator 22 may be received by the controller 40, in particular by the current controller 44. The actual stator current I may be measured by a current sensor (not shown) or may be estimated by the controller 40. The current sensor may be a component of the generator 22. Then, a stator voltage reference $U_{D,REF}$, $U_{Q,REF}$ corresponding to the three-phase AC voltage $U_u$, $U_v$, $U_w$ to be generated by the generator 22 may be determined depending on the actual stator current I and on the modified stator current reference $I_{D,REF}$, $I_{Q,REF}$, e.g. by the current controller 44.

After receiving the actual stator current I and before determining the stator voltage reference $U_{D,REF}$, $U_{Q,REF}$ an actual d-axis stator current $I_D$ and an actual q-axis current $I_Q$ may be determined from the actual stator current I. In this case, the stator voltage reference $U_{D,REF}$, $U_{Q,REF}$ may be determined depending on the actual d-axis stator current $I_D$, the actual q-axis current $I_Q$, and on the modified stator current reference $I_{D,REF}$, $I_{Q,REF}$. The actual d-axis stator current $I_D$ and the actual q-axis stator current $I_Q$ may be determined from the actual stator current I by a space vector transformation, for example being carried out by the first transformation block 46. In general, a space vector transformation may be used to transform signals from three-phase signals into space vector rotating in synchronous coordinates by utilizing Park and Clarke transformations.

The stator voltage reference $U_{D,REF}$, $U_{Q,REF}$ may comprise two stator voltage reference components, e.g., a d-axis voltage reference component $U_{D,REF}$ and a q-axis voltage reference component $U_{Q,REF}$. The d-axis voltage reference component $U_{D,REF}$ and the q-axis voltage reference component $U_{Q,REF}$ in the dq-frame may be transferred into three voltage reference components in the uvw-frame, i.e., an u-phase voltage reference component $U_{u,REF}$, a v-phase voltage reference component $U_{v,REF}$ and a w-phase voltage reference component $U_{w,REF}$, e.g., by an inverse space vector transformation which may be carried out by the second transformation block 48. When transferring the stator voltage references $U_{D,REF}$, $U_{Q,REF}$ in the dq-frame into the three-phase voltage reference components $U_{u,REF}$, $U_{v,REF}$, $U_{w,REF}$ in the uvw-frame, an actual angle $\Theta$ of the stator may be considered, in particular within the first and/or second transformation block 46, 48. The actual angle $\Theta$ may be measured by an appropriate sensor, e.g., a hall-sensor, or may be estimated, e.g., by the controller 40.

Then, a switching signal SWS for the inverter 40 may be generated depending on the modified stator current reference $I_{D,REF}$, $I_{Q,REF}$, e.g., by the modulator 50. The switching signal SWS may be determined depending on the modified stator current reference $I_{D,REF}$, $I_{Q,REF}$ by generating the switching signal depending on the determined stator voltage reference $U_{D,REF}$, $U_{Q,REF}$, e.g., by the three voltage reference components $U_{u,REF}$, $U_{v,REF}$, $U_{w,REF}$ in the uvw-frame. The switching signal SWS may comprise switching commands for the semiconductor switches 32. When generating the switching signal SWS, timing limitations of the semiconductor switches 32, such as an interlocking time and/or a minimal on/off time of the semiconductor switches 32, may be considered. The switching signal SWS, in particular the switching commands, then may be translated into gate voltages for controlling the semiconductor switches 32, as it is known in the art. So, the modulator 50 translates the voltage reference components $U_{u,REF}$, $U_{v,REF}$, $U_{w,REF}$ into gate driver signals in a semiconductor bridge comprising the semiconductor switches 32, which will then realize the corresponding three-phase AC voltage on average over a switching cycle of the inverter 20.

Finally, the inverter 20 may be operated by the controller 40 by supplying the switching signal SWS to the inverter 20, in particular to the gates of the semiconductor switches 32.

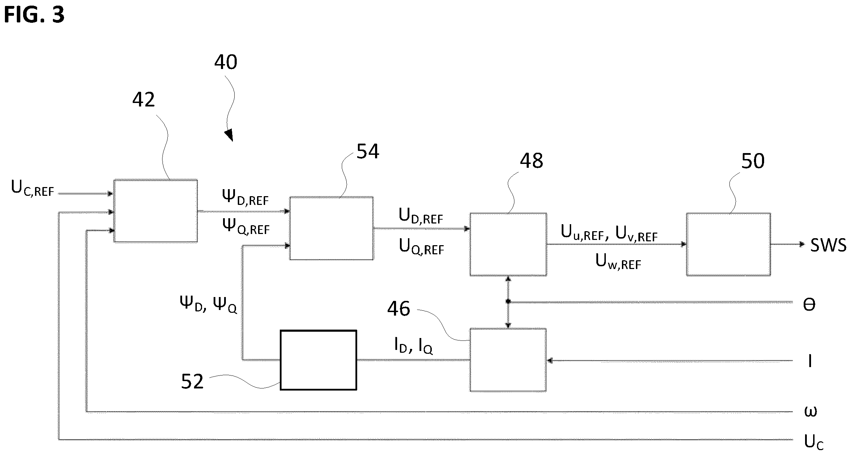

**Fig. 3** shows an exemplary embodiment of a controller 40 for operating an inverter, e.g. for operating the inverter 20 of figure 1. The controller 40 shown in figure 3 may widely correspond to the controller 40 described with respect to figure 2. Therefore, in order to provide a concise description and to avoid any unnecessary repetitions, only those features of the controller 40 of figure 3 are described in the following in which the controller of figure 3 differs from the controller of figure 2.

The controller 40 may comprise a flux controller 54 instead of the current controller 44. In this case, the controller 40 may comprise a flux calculator 52.

Another stator parameter reference, e.g., a stator flux reference $\Psi_{D,REF}$, $\Psi_{Q,REF}$ corresponding to a stator flux to be generated by the generator 22 may be determined depending on the received DC-link voltage reference $U_{C,REF}$ and on the received actual DC-link voltage Uc, e.g., by the DC voltage controller 42. When determining the stator flux reference $\Psi_{D,REF}$, $\Psi_{Q,REF}$, a d-axis stator flux reference $\Psi_{D,REF}$ and a q-axis stator flux reference $\Psi_{Q,REF}$ may be determined. When the rotational speed $\omega$ is determined, the stator flux reference $\Psi_{D,REF}$, $\Psi_{Q,REF}$ may be determined depending on the rotational speed $\omega$ also.

Before sending the determined stator flux reference $\Psi_{D,REF}$, $\Psi_{Q,REF}$ to the flux controller 54, the determined stator flux reference $\Psi_{D,REF}$, $\Psi_{Q,REF}$ may be modified by adding a dynamic stabilizing term to the stator flux reference $\Psi_{D,REF}$, $\Psi_{Q,REF}$. The dynamic stabilizing term may be added to at least one of the stator flux references $\Psi_{D,REF}$, $\Psi_{Q,REF}$. For example, the dynamic stabilizing term may be added to the d-axis stator flux reference $\Psi_{D,REF}$. The flux controller 54 may have a control law for regulating the inverter current to a value defined by the determined stator flux reference $\Psi_{D,REF}$, $\Psi_{Q,REF}$ coming from the DC voltage controller 42.

The dynamic stabilizing term may be determined such that the variation in the energy stored in the magnetic field of the generator 22 and corresponding to actual stator currents $I_D$, $I_Q$ or to actual stator fluxes $\Psi_D$, $\Psi_Q$ is minimized, wherein the actual stator fluxes $\Psi_D$, $\Psi_Q$ may be determined from the actual stator currents $I_D$, $I_Q$ by the flux calculator 52, as it is known in the art. In particular, in order to allow for high proportional gain at high load the stator flux reference $\Psi_{D,REF}$, $\Psi_{Q,REF}$, e.g., the d-axis stator flux reference $\Psi_{D,REF}$, may be chosen such that the energy needed to change actual stator flux components $\Psi_D$, $\Psi_Q$ is minimized:

$$\frac{1}{2L}\frac{d\Psi_{D,REF}^2}{dt} + \frac{1}{2L}\frac{d\Psi_{Q,REF}^2}{dt} = 0$$

with L being the stator inductance of the stator of the generator 22.

An inverter system comprises the inverter 20 for driving the generator 22 and the controller 40 for operating the inverter 20.

A computer program for operating the inverter 20 for driving the generator 22 may be provided. The computer program may comprise computer-readable instructions which, when being executed by the processor of the controller 40, carry out the method as described above. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| inverter | 20 |
| generator | 22 |
| DC-link | 24 |
| DC-link capacitor | 26 |
| first DC-terminal | 28 |
| second DC-terminal | 30 |
| semiconductor switch | 32 |
| AC-terminal | 34 |
| controller | 40 |
| DC voltage controller | 42 |
| current controller | 44 |
| first transformation block | 46 |
| second transformation block | 48 |
| modulator | 50 |
| flux calculator | 52 |
| flux controller | 54 |
| DC current | $I_{DC}$ |
| actual DC-link voltage | $U_{DC}$ |
| phase u current | $I_u$ |
| phase v current | $I_v$ |
| phase w current | $I_w$ |
| phase a voltage | $U_u$ |
| phase b voltage | $U_v$ |
| phase c voltage | $U_w$ |
| DC-link voltage reference | $U_{C,REF}$ |
| d-axis stator voltage reference | $U_{D,REF}$ |
| d-axis stator voltage reference | $U_{Q,REF}$ |
| phase u voltage reference | $U_{u,REF}$ |
| phase v voltage reference | $U_{v,REF}$ |
| phase w voltage reference | $U_{w,REF}$ |
| d-axis stator current reference | $I_{D,REF}$ |
| q-axis stator current reference | $I_{Q,REF}$ |
| d-axis stator current reference | $\Psi_{D,REF}$ |
| q-axis stator current reference | $\Psi_{Q,REF}$ |
| actual d-axis current | $I_D$ |
| actual q-axis current | $I_Q$ |
| actual d-axis flux | $\Psi_D$ |
| actual q-axis flux | $\Psi_Q$ |
| stator angle | $\Theta$ |
| actual current | I |

(continued)

| | |
|---|---|
| rotational speed | ω |
| switching signal | SWS |

**Claims**

1. A method for operating an inverter (20) for driving a generator (22), the inverter (20) comprising a DC-link (24) having a DC-link capacitor (26) and the inverter (20) being configured for converting a three-phase AC voltage ($U_u$, $U_v$, $U_w$) generated by the generator (22) into a DC-link voltage to be applied to the DC-link capacitor (26), the method comprising:

   receiving a DC-link voltage reference ($U_{C,REF}$) to be applied to the DC-link (24);
   receiving an actual DC-link voltage (Uc) currently being present over the DC-link (24);
   determining a stator parameter reference ($I_{D,REF}$, $I_{Q,REF}$, $\Psi_{D,REF}$, $T_{Q,REF}$) depending on the received DC-link voltage reference ($U_{C,REF}$) and on the received actual DC-link voltage (Uc);
   modifying the determined stator parameter reference ($I_{D,REF}$, $I_{Q,REF}$, $\Psi_{D,REF}$, $\Psi_{Q,REF}$) by adding a dynamic stabilizing term to the stator parameter reference ($I_{D,REF}$, $I_{Q,REF}$, $\Psi_{D,REF}$, $\Psi_{Q,REF}$);
   generating a switching signal (SWS) for the inverter (20) depending on the modified stator parameter reference ($I_{D,REF}$, $I_{Q,REF}$, $\Psi_{D,REF}$, $\Psi_{Q,REF}$); and
   operating the inverter (20) by supplying the switching signal (SWS) to the inverter (20).

2. The method according to claim 1, wherein

   when determining the stator parameter reference ($I_{D,REF}$, $I_{Q,REF}$, $\Psi_{D,REF}$, $\Psi_{Q,REF}$), a d-axis stator parameter reference ($I_{D,REF}$, $\Psi_{D,REF}$) and a q-axis stator parameter reference ($\Psi_{Q,REF}$, $T_{Q,REF}$) are determined, and
   the dynamic stabilizing term is added to at least one of the stator parameter references ($I_{D,REF}$, $I_{Q,REF}$, $\Psi_{D,REF}$, $\Psi_{Q,REF}$).

3. The method according to claim 2, wherein
   the dynamic stabilizing term is added to the d-axis stator parameter reference ($I_{D,REF}$, $\Psi_{D,REF}$).

4. The method according to one of the preceding claims, before adding the dynamic stabilizing term to the stator parameter reference ($I_{D,REF}$, $I_{Q,REF}$, $\Psi_{D,REF}$, $T_{Q,REF}$) comprising:
   determining the dynamic stabilizing term such that an electric energy needed to change an actual current (I) generated by the generator (22) and corresponding to actual stator currents ($I_D$, $I_Q$) or actual stator fluxes ($\Psi_D$, $\Psi_Q$) is minimized.

5. The method according to claim 4, wherein
   when determining the dynamic stabilizing term such that the electric energy needed to change the actual current (I) is minimized, the dynamic stabilizing term is determined such that a change of the electric energy stored in the actual stator currents ($I_D$, $I_Q$) or the actual stator fluxes ($\Psi_D$, $\Psi_Q$) corresponding to the actual current (I) generated by the generator (22) is minimized.

6. The method according to claim 5, wherein
   the dynamic stabilizing term is determined such that

$$\frac{L}{2}\frac{dI^2_{D,REF}}{dt} + \frac{L}{2}\frac{dI^2_{Q,REF}}{dt} = 0$$

and/or

$$\frac{1}{2L}\frac{d\Psi^2_{D,REF}}{dt} + \frac{1}{2L}\frac{d\Psi^2_{Q,REF}}{dt} = 0$$

with L being a stator inductance of a stator of the generator (22).

7. The method according to one of the preceding claims, comprising:
before determining the stator parameter reference ($I_{D,REF}$, $I_{Q,REF}$, $\Psi_{D,REF}$, $\Psi_{Q,REF}$), determining a rotational speed ($\omega$) of the generator (22) and determining the stator current reference ($I_{D,REF}$, $I_{Q,REF}$, $\Psi_{D,REF}$, $T_{Q,REF}$) depending on the rotational speed ($\omega$) of the generator (22).

8. The method according to one of the preceding claims, comprising:

   receiving an actual stator current (I) generated by the generator (22);
   determining a stator voltage reference ($U_{D,REF}$, $U_{Q,REF}$) corresponding to the three-phase AC voltage ($U_u$, $U_v$, $U_w$) to be generated by the generator (22) depending on the actual stator current (I) and on the modified stator parameter reference ($I_{D,REF}$, $I_{Q,REF}$, $\Psi_{D,REF}$, $\Psi_{Q,REF}$); and
   generating the switching signal (SWS) depending on the modified stator parameter reference ($I_{D,REF}$, $I_{Q,REF}$, $\Psi_{D,REF}$, $T_{Q,REF}$) by generating the switching signal (SWS) depending on the determined stator voltage reference ($U_{D,REF}$, $U_{Q,REF}$).

9. The method according to claim 8, after receiving the actual stator current (I) and before determining the stator voltage reference ($U_{D,REF}$, $U_{Q,REF}$) comprising:

   determining the actual d-axis stator current ($I_D$) and the actual q-axis stator current ($I_Q$) from the actual stator current (I), and
   determining the stator voltage reference ($U_{D,REF}$, $U_{Q,REF}$) depending on the actual d-axis stator current ($I_D$) and the actual q-axis current ($I_Q$) and on the modified stator parameter reference ($I_{D,REF}$, $I_{Q,REF}$, $\Psi_{D,REF}$, $\Psi_{Q,REF}$).

10. The method according to one of the preceding claims, wherein
    the stator parameter reference is a stator current reference ($I_{D,REF}$, $I_{Q,REF}$) or a stator flux reference ($\Psi_{D,REF}$, $\Psi_{Q,REF}$).

11. A controller (40) for operating an inverter (20) for driving a generator (22), the inverter (20) comprising a DC-link (24) having a DC-link capacitor (26) and the inverter (20) being configured for converting a three-phase AC voltage ($U_u$, $U_v$, $U_w$) generated by the generator (22) into a DC-link voltage (Uc) to be applied to the DC-link capacitor (26), the controller (40) comprising:

    a memory for storing one or more measured, determined, and/or predetermined current and/or voltage values; and
    a processor communicatively coupled to the memory and being configured to carry out the method according to one of claims 1 to 10.

12. An inverter system, comprising:

    an inverter (20) for driving a generator (22), the inverter (20) having a DC-link (24) having a DC-link capacitor (26) and being configured for converting a three-phase AC voltage ($U_u$, $U_v$, $U_w$) generated by the generator (22) into a DC-link voltage (Uc) to be applied to the DC-link capacitor (26); and
    a controller (40) according to claim 11 for operating the inverter (20).

13. A computer program for operating an inverter (20) for driving a generator (22), the computer program comprising computer-readable instructions which, when being executed by a processor of a controller (40) according to claim 11, carry out the method in accordance with one of claims 1 to 10.

14. Computer-readable medium on which a computer program according to claim 13 is stored.

**FIG. 1**

**FIG. 2**

EP 4 654 458 A1

**FIG. 3**

Europäisches
Patentamt

European
Patent Office

Office européen
des brevets

## EUROPEAN SEARCH REPORT

**Application Number**

EP 24 17 7588

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 692 321 B2 (CONVERTEAM LTD [GB]) 6 April 2010 (2010-04-06) * the whole document * | 1-14 | INV. H02P9/30 H02M7/797 H02P9/34 |
| X | US 2019/351770 A1 (ZHOU GUOZHEN [US] ET AL) 21 November 2019 (2019-11-21) * the whole document * | 1-14 | |
| A | NAMHO HUR ET AL: "A Fast Dynamic DC-Link Power-Balancing Scheme for a PWM Converter-Inverter System", IEEE TRANSACTIONS ON INDUSTRIAL ELECTRONICS, IEEE SERVICE CENTER, PISCATAWAY, NJ, USA, vol. 48, no. 4, 1 August 2001 (2001-08-01) , XP011023850, ISSN: 0278-0046 * the whole document * | 1-14 | |

**TECHNICAL FIELDS SEARCHED (IPC)**

H02P
H02M

The present search report has been drawn up for all claims

| Place of search | Date of completion of the search | Examiner |
|---|---|---|
| Munich | 8 October 2024 | Fraïssé, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

EP 4 654 458 A1

## ANNEX TO THE EUROPEAN SEARCH REPORT
## ON EUROPEAN PATENT APPLICATION NO.

EP 24 17 7588

08-10-2024

| Patent document cited in search report | | Publication date | Patent family member(s) | | Publication date |
|---|---|---|---|---|---|
| US 7692321 | B2 | 06-04-2010 | US | 2007121354 A1 | 31-05-2007 |
| | | | US | 2009146426 A1 | 11-06-2009 |
| | | | US | 2009146500 A1 | 11-06-2009 |
| | | | US | 2009147549 A1 | 11-06-2009 |
| US 2019351770 | A1 | 21-11-2019 | EP | 3570424 A1 | 20-11-2019 |
| | | | US | 2019351770 A1 | 21-11-2019 |

EPO FORM P0459

For more details about this annex : see Official Journal of the European Patent Office, No. 12/82